# EUROPEAN PATENT SPECIFICATION

(11) **EP 0 326 796 B1**
(45) Date of publication and mention of the grant of the patent: **15.12.1993**
(21) Application number: 89100069.7
(22) Date of filing: 04.01.1989
(51) Int. Cl.: G06K 7/10

(54) **Method and apparatus for reading laser bar codes on shiny-finished fuel rod cladding tubes**
Verfahren und Gerät zum Lesen von Strichkoden auf Brennstoffhülle mit polierter Oberfläche
Méthode et appareil pour lire des codes à barre sur des tubes rendus brillants qui forment la surface de barres de combustibles

(30) Priority: 04.02.1988 US 152288
(43) Date of publication of application: 09.08.1989
(73) Proprietor: WESTINGHOUSE ELECTRIC CORPORATION, Pittsburgh Pennsylvania 15222 (US)
(72) Inventor: Goldenfield, Mark Philip, Columbia, SC 29223 (US); Lambert, David Vincent, St. Matthews, SC 29135 (US)
(74) Representative: Gallo, Wolfgang, Dipl.-Ing. (FH)

(56) References cited:
- EP-A- 0 061 000
- EP-A- 0 162 582
- US-A- 4 105 926
- US-A- 4 587 407

## Description

### BACKGROUND OF THE INVENTION

The present invention is concerned with a method and apparatus for reading lased bar codes on shiny-finished articles, in particular fuel rod cladding tubes.

Bar code labels used for identifying retail products have also been used for identification of nuclear fuel rods. For instance, in U.S. Patent No. 4 587 407, bar code labels are affixed to nuclear fuel rod claddings which contain information such as an individual identification number assigned to the particular fuel rod. The bar code is adapted to be optically scanned and read to determine its assigned number. The bar code labels were employed for traceabilty of a fuel rod during its manufacture. The labels are manually applied at the start of the manufacturing process and manually removed at the end. Thus, there was no continued traceability of individual fuel rods after completion of manufacturing.

The use of bar codes would appear to have great promise for identification and traceability of individual fuel rods. However, their application on labels has shortcomings. The labels are costly to apply and remove. The labels will not stay on while the fuel rods are in use in a nuclear reactor.

### SUMMARY OF THE INVENTION

The present invention provides a method and apparatus for reading lased bar codes on individual fuel rods, in particular as a part of a system for nuclear fuel rod identification and traceability forming a comprehensive approach to individual fuel rod identification permitting traceability of individual fuel rods during all stages of both manufacture and use.

While the use of labels carrying the bar code certainly provides good readability of the bar code, the aforementioned disadvantages of the bar code labels in terms of expensive handling would render the application of bar code identification directly on the fuel rod more desirable. However, this causes a problem because a bar code etched directly on the shiny finished surface of the fuel rod cladding tubes would render proper recognition and reading of the bar code information by a light reader difficult. The same problem would obviously occur quite generally in case of applying bar codes directly on any metallic rod-shaped or other article having a shiny surface finish.

This problem does not appear to have been addressed by the prior art.

It is the object of the present invention to provide a method and apparatus for proper reading lased bar codes on a shiny finished surface of an article, in particular of a nuclear fuel rod cladding tube, thus allowing to dispense with bar code labels and allowing the application of bar codes lased directly on the shiny finished surface of such article or nuclear fuel rod.

Accordingly, the present invention resides in a method of reading a bar code etched directly on a shiny finished surface of an article, in particular of a nuclear fuel rod, as defined in claim 1.

Preferred details of the method according to the invention are defined in subclaims 2 to 6.

The invention also resides in an apparatus for reading a bar code etched directly on a shiny finished surface of a article, in particular of a nuclear fuel rod, as defined in claim 7.

Preferred embodiments and advantageous developments of such apparatus are defined in subclaims 8 to 11.

### BRIEF DESCRIPTION OF THE DRAWINGS

The present invention will become more apparent from the following detailed description when taken in conjunction with the drawings wherein there is shown and described an illustrative embodiment of the invention. In the drawings:
- Fig. 1: is an enlarged fragmentary view of the upper end portion of a nuclear fuel rod illustrating an identification in the form of a bar code etched directly thereon.
- Fig. 2: is a cross-sectional view of the bar code carrying upper end portion of the nuclear fuel rod.
- Fig. 3: is a side elevational view of a workstation including the bar code reading apparatus for carrying out the method of the present invention.
- Fig. 4: is an enlarged side view of the upper portion of the workstation showing the bar code reading apparatus according to the present invention in more detail.
- Figs. 5 and 6: are schematical side elevational and perspective views showing the operation of the bar code reading apparatus.

### DETAILED DESCRIPTION OF THE INVENTION

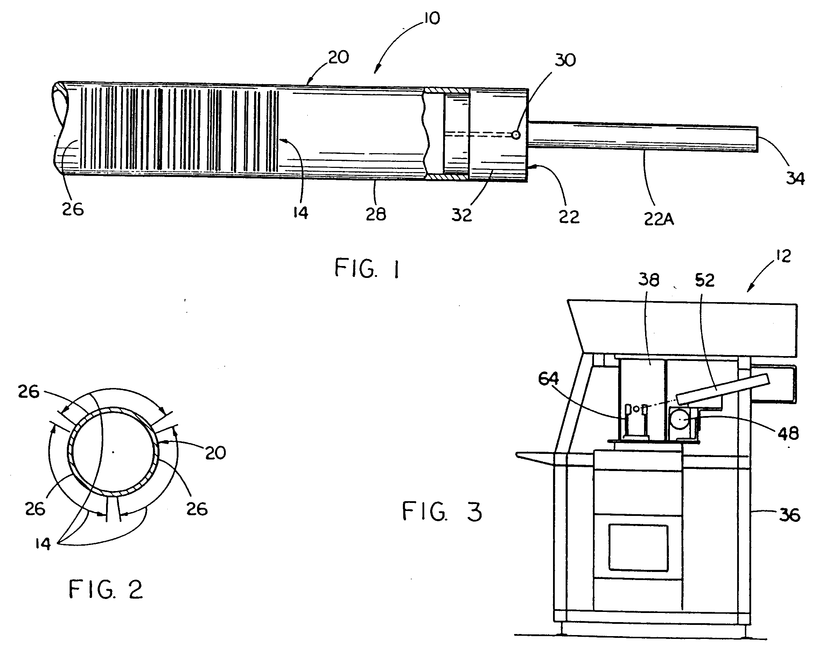

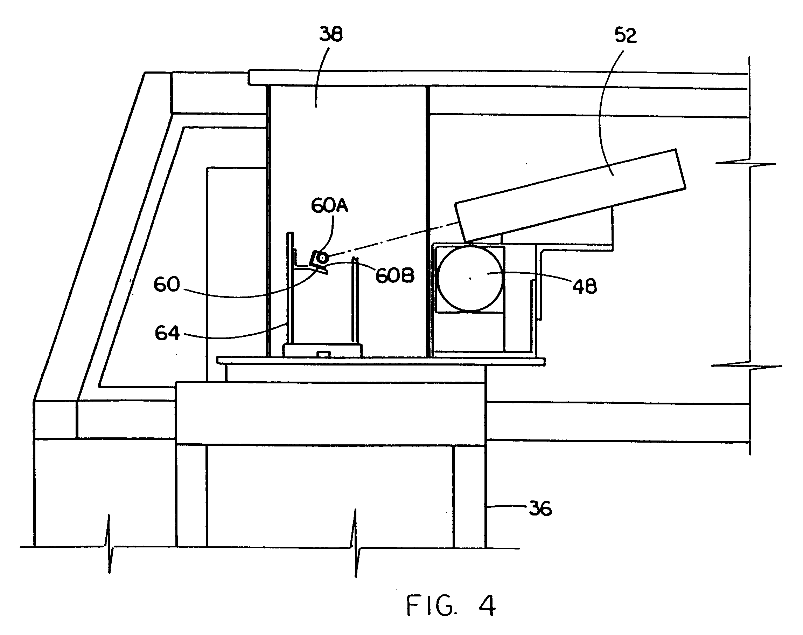

Referring now to the drawings, there is shown a nuclear fuel rod, generally designated as 10 in Fig. 1, which is appropriately marked by employment of a laser marking and reading workstation, generally designated 12 in figs. 3 and 4 of a nuclear fuel rod identification system for making the individual fuel rod 10 capable of being traced during its manufacture and subsequent use in a nuclear reactor.

The indicia applied by employment of the laser marking workstation 12 are in the form of a bar code 14 (made up of a series of spaced apart dark line of varying widths) which correspond to a specific serial number.

The bar code 14 is applied in a first stage directly on the cladding tube 20 of the fuel rod 10 prior to loading the tube 20 with nuclear fuel and attaching top and bottom end plugs 22 to its opposite ends to complete the assembled fuel rod 10. More particularly, a laser beam is used to engrave or etch the bar code 14 directly on a circumferential surface portion 26 on an upper end portion 28 of the cladding tube 20, as depicted in fig. 1. As seen in fig. 2, preferably the bar code 14 is etched directly on three spaced circumferential surface portions 26 of the cladding tube 20, with each bar code 14 being spaced apart circumferentially and covering slightly less than 120 degrees each.

In a second stage, after loading the nuclear fuel in the form of a stack of pellets into the cladding tube 20, and attaching the top and bottom end plugs 22 to the opposite ends of the ful rod cladding tube 20 with the bar code 14 already etched thereon, by use again of the laser beam at the workstation 12 identification and enrichment symbologies are engraved or etched respectively onto the side 32 and outer end surface 34 of the top end plug 22 of the assembled fuel rod 10.

Turning now to fig. 3, the laser marking and reading workstation 12 has a floor-supported frame 36 which supports a sealed chamber 38, and a positioning mechanism which includes a rotary chuck driven by a stepping motor 48 and being adapted to grip initially the fuel rod cladding tube 20 or the assembled fuel rod 10. The workstation 12 also has a laser bar code reader 52 and laser means (not shown) for applying the bar code 14 on the cladding tube 20, or said indicia on the end plug 22. The above-mentioned second stage step of engraving identification and enrichment indicia on the upper end plug 22 includes reading the bar code 14 engraved on the cladding tube during said first stage prior to loading the fuel rod with fuel pellets.

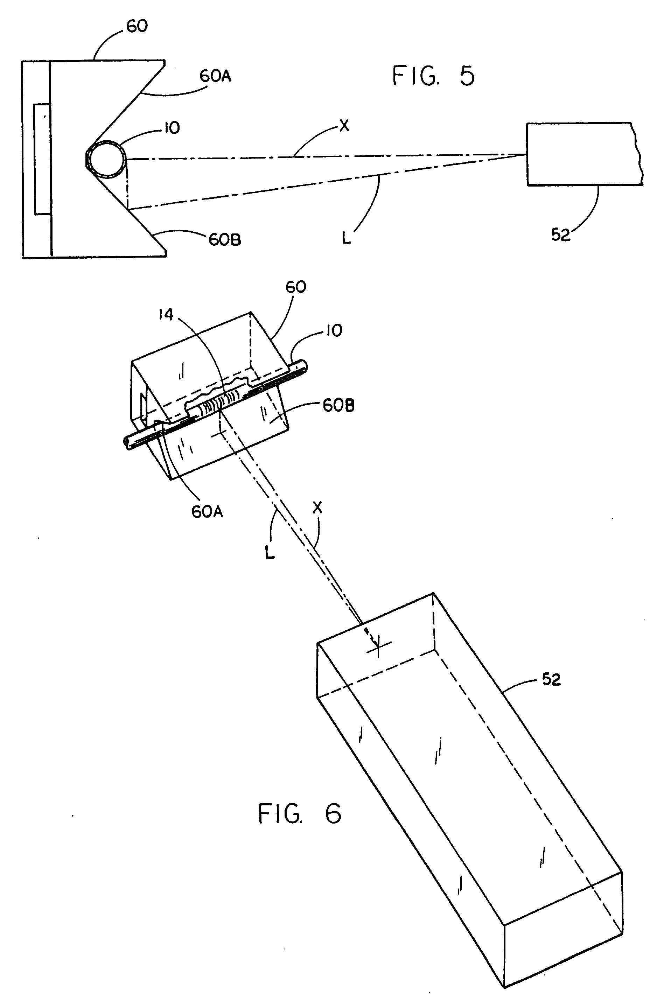

As seen in figs. 4, 5 and 6, the frame 36 of the workstation 12 also supports a reflector member 60 adjacent to and generally coextensive with the upper end portion 28 of the fuel rod 10 when the latter is positioned within the sealed chamber. The reflector member 60, which is the primary feature of the apparatus of the present invention, is disposed on a side of the fuel rod 10 opposite from the bar code reader 52 and defines a pair of diffuser surfaces 60A, 60B which are oppositely inclined preferably at about 30 degrees to the horizontal axis X extending between the reader 52 and the fuel rod 10, as seen in fig. 5.

In addition to the above components but not illustrated in the drawings, the workstation 12 has associated therewith a computer electrically connected to the stepping motor 48, the reader 52 and the laser means for coordinating and controlling the operation thereof. Sensors 62 electrically connected to the computer and mounted on a bracket 64, as seen in fig. 3, are used to sense the movement of the fuel rod 10 (or cladding tube 20) to assist the computer in coordinating the operations of the motor 48, the reader 52 and the laser means.

In brief, the computer controls the operation of the laser means to initially etch the correct bar code 14 on the cladding tube 20 representing the serial number assigned to the specific fuel rod 10. Later, after the fuel rod 10 is assembled, the reader 52 will "read" the laser light reflected thereto from the bar code 14 via one of the diffuser surfaces 60A or 60B. The computer will then direct the laser means to etch on the top end plug side 32 the last four digits of the serial number read by the reader and then match the serial number with one in its memory to select the correct enrichment symbology to etch on the top end plug end 34.

Referring again to figs. 4, 5 and 6, there is illustrated the fuel rod 10 positioned with its upper end portion 28 extending into the workstation 12 and located adjacent the reflector member 60 and aligned between it and the bar code reader 52 in preparation for reading of the bar code laser-etched on fuel rod end portion 28. The computer controls operation of a motor (not shown) which causes oscillation of the reader 52 back and forth between the centerline or X axis and a line L extending to the diffuser surface 60B. The reader 52 thus "reads" light reflected from the surface 60B instead of directly from the shiny surface of the fuel rod 10 on which the bar code is etched. Only a fraction of the light transmitted to the fuel rod 10, preferably about 25 %, is reflected back to the reader from the 30 degree displaced (plus or minus 1 degree) surface 60B.

The laser bar code reader 52, a commercially-available component per se, emits a He-Ne light which is used to interpret the bar code and send an electrical signal to a decoder (not shown) which will digitize the signal. This is not possible when reading lased bar codes on shiny metal surfaces due to the reflectivity of the metal. Too much of the beam would then be reflected back to the interpreter in the reader which would block the electrical signal from being received and interpreted. A diffused surface behind the fuel rod will allow a strong signal to be received by the laser reader because the reader is then viewing a reflection of the bar code onto the diffused background and will receive a signal which appears to the interpreter as a black code on a white surface. The diffused background will not reflect the original laser beam back to the reader 52 and block the electrical signal from being received. Instead, the diffusing of the laser beam decreases the amount of light being reflected and received by the reader.

## Claims

1. A method of reading a bar code etched directly on a shiny finished surface of an article, e.g. of a nuclear fuel rod, characterized by the steps of:
a) positioning the article (10) with its surface portion (26) carrying the bar code (14) located adjacent to a light diffuser surface (60) and between such diffuser surface and a light reader (52),
b) directing a beam of light on the bar code carrying surface portion (26) such that the light is reflected therefrom onto the light diffuser surface (60), and
c) receiving and reading the light reflected from the bar code carrying surface (26) via the light diffuser surface (60) to the light reader (52).

2. The reading method according to claim 1, characterized in that the light diffuser surface (60) is disposed relative to the path of the beam of light directed to the bar code carrying surface portion (60) of the article (10) such that only about 25 % of the light is reflected by the diffuser surface (60) back to the light reader (52).

3. The reading method according to claim 1 or 2, characterized in that the light diffuser surface (60) is disposed at about 30 degrees relative to the path of the beam of light directed to the bar code carrying surface portion (26) of the article (10).

4. The reading method according to any of claims 1 to 3, characterized in that the beam of light is generated by the light reader (52).

5. The reading method according to claim 4, characterized in that the light reader (52) is oscillated between angularly displaced positions to respectively generate and direct the beam of light toward the bar code carrying surface portion (26) of the article (10) in the one position and to read light reflected back from the light diffuser surface (60) in the other position.

6. The reading method according to claim 4 or 5, characterized in that the light beam generated by the light reader (50) is laser light.

7. An apparatus for reading a bar code etched directly on a shiny finished surface of an article, in particular of a nuclear fuel rod, comprising:
a) means defining a light diffuser surface (60),
b) a light reader (52) facing generally toward said light diffuser surface (60),
c) means (44) for positioning the article (10) such that its surface portion (26) having the bar code (14) etched directly thereon is disposed adjacent to said light diffuser surface (60) and between said light diffuser surface and said light reader,
d) a light source (52) for directing a beam of light on the bar code carrying surface portion (26) of the article (10),
e) the arrangement being such that the light is reflected from the bar code carrying surface portion (26) onto the light diffuser surface (60) and from the latter to said light reader (52).

8. The reading apparatus according to claim 7, characterized in that said light diffuser surface (60) is disposed relative to the path of the beam of light directed to the bar code carrying surface portion (26) such that only about 25 % of the light is reflected by said diffuser surface (60) back to said light reader (52).

9. The reading apparatus according to claim 7 or 8, characterized in that said light diffuser surface (60) is disposed at about 30 degrees relative to the path of the beam of light directed to the bar code carrying surface portion (26) of the article (10).

10. The reading apparatus according to any of claims 7 to 9, characterized in that said light reader (52) also forms said light source to generate a beam of laser light.

11. The reading apparatus according to claim 10, characterized in that said light reader (52) is adapted to oscillate between angularly displaced positions to respectively generate and direct the beam of light toward the bar code carrying surface portion (26) of the article (10) in the one position and to read light reflected back from said light diffuser surface (60) in the other position.

## Patentansprüche

1. Verfahren zum Lesen eines direkt auf einer glanzpolierten Oberfläche eines Gegenstands, beispielsweise eines Kernbrennstabs, eingeätzten Barcodes, gekennzeichnet durch die Schritte:
a) Positionieren des Gegenstands (10) mit seinem dem Barcode (14) tragenden Oberflächenbereich (26) an einer Lichtstreufläche (60) und zwischen dieser Lichtstreufläche und einen Lichtleser (52),
b) Richten eines Lichtstrahls auf den den Barcode tragenden Oberflächenbereich (26) derart, daß das Licht von diesem auf die Lichtstreufläche (60) reflektiert wird, und
c) Aufnehmen und Lesen des von dem den Barcode tragenden Oberflächenbereich (26) über die Lichtstreufläche (60) zum Lichtleser (52) reflektierten Lichts.

2. Leseverfahren nach Anspruch 1, dadurch gekennzeichnet, daß die Lichtstreufläche (60) relativ zum Pfad des auf den den Barcode tragenden Oberflächenbereich (26) des Gegenstands (10) gerichteten Lichtstrahls so angeordnet ist, daß nur etwa 25% des Lichts von der Lichtstreufläche (60) zum Lichtleser (52) zurückreflektiert werden.

3. Leseverfahren nach Anspruch 1 oder 2, dadurch gekennzeichnet, daß die Lichtstreufläche (60) unter etwa 30° relativ zum Pfad des auf den den Barcode tragenden Oberflächenbereich (26) des Gegenstands (10) gerichteten Lichtstrahls angeordnet ist.

4. Leseverfahren nach einem der Ansprüche 1 bis 3, dadurch gekennzeichnet, daß der Lichtstrahl vom Lichtleser (52) erzeugt wird.

5. Leseverfahren nach Anspruch 4, dadurch gekennzeichnet, daß der Lichtlser (52) zwischen winkelmäßig versetzten Positionen schwingend bewegt wird, um in der einen Position den Lichtstrahl zu erzeugen und auf den den Barcode tragenden Oberflächenbereich (26) des Gegenstands (10) zu erzeugen und zu richten und in der anderen Position das von der Lichtstreufläche (60) zurückreflektierte Licht zu lesen.

6. Leseverfahren nach Anspruch 4 oder 5, dadurch gekennzeichnet, daß der vom Lichtleser (50) erzeugte Lichtstrahl Laserlicht ist.

7. Gerät zum Lesen eines direkt auf einer glanzpolierten Oberfläche eines Gegenstands, insbesondere eines Kernbrennstabs, eingeätzten Barcodes, mit:
a) Mitteln, die eine Lichtstreufläche (60) bilden,
b) einem Lichtleser (52), der im wesentlichen zu der Lichtstreufläche (60) hin gerichtet ist,
c) Mitteln (44) zum Positionieren des Gegenstands (10) derart, daß sein den direkt eingeätzten Barcode (14) tragender Oberflächenbereich (26) nahe der Lichtstreufläche (60) und zwischen dieser Lichtstreufläche und dem Lichtleser angeordnet ist,
d) einer Lichtquelle (52) zum Richten eines Lichtstrahls auf den den Barcode tragenden Oberflächenbereich (26) des Gegenstands (10),
e) wobei die Anordnung so getroffen ist, daß das Licht von dem den Barcode tragenden Oberflächenbereich (26) auf die Lichtstreufläche (60) und von der letzteren zum Lichtleser (52) reflektiert wird.

8. Lesegerät nach Anspruch 7, dadurch gekennzeichnet, daß die Lichtstreufläche (60) relativ zum Pfad des auf den den Barcode tragenden Oberflächenbereich (26) gerichteten Lichtstrahls so angeordnet ist, daß nur etwa 25% des Lichts von der Lichtstreufläche (60) zurück zum Lichtleser (52) reflektiert werden.

9. Lesegerät nach Anspruch 7 oder 8, dadurch gekennzeichnet, daß die Lichtstreufläche (60) unter etwa 30° relativ zum Pfad des auf den den Barcode tragenden Oberflächenbereich (26) des Gegenstands (10) gerichteten Lichtstrahls angeordnet ist.

10. Lesegerät nach einem der Ansprüche 7 bis 9, dadurch gekennzeichnet, daß der Lichtleser (52) auch die Lichtquelle bildet und einen Laserlichtstrahl erzeugt.

11. Lesegerät nach Anspruch 10, dadurch gekennzeichnet, daß der Lichtleser (52) schwingend zwischen zwei winkelmäßig versetzten Positionen bewegbar ist, um in der einen Position den Lichtstrahl zu erzeugen und auf den den Barcode tragenden Oberflächenbereich (26) des Gegenstands (10) zu richten und in der anderen Position das von der Lichtstreufläche (60) zurückreflektierte Licht zu lesen.

## Revendications

1. Méthode pour lire un code à barres gravé directement sur une surface rendue brillante d'un article, par exemple de barre de combustible nucléaire, caractérisée par les étapes :
a) positionner l'article (10) avec sa zone de surface (26) portant le code à barres (14) placée à un côté d'une surface de diffusion de la lumière (60) et entre cette surface de diffusion et un lecteur de lumière (52),
b) diriger un faisceau de lumière sur la zone de surface (26) portant le code à barres de manière à ce que la lumière est réfléchie de celle-ci sur la surface de diffusion de la lumière (60), et
c) recevoir et lire la lumière réfléchie par la surface (26) portant le code à barres via la surface de diffusion de la lumière (60) au lecteur de lumière (52).

2. Méthode de lecture selon la revendication 1, caractérisée en ce que la surface de diffusion de la lumière (60) est disposée par rapport au passage du faisceau lumineux dirigé sur la zone de surface (60) portant le code à barres de l'article (10) de manière à ce que seulement environ 25 % de la lumière soient réfléchis en retour vers le lecteur de lumière (52) par la surface de diffusion (60).

3. Méthode de lecture selon les revendications 1 ou 2, caractérisée en ce que la surface de diffusion de la lumière (60) est disposée à environ 30 degrés par rapport au passage du faisceau lumineux dirigé sur la zone de surface (26) portant le code à barres de l'article (10).

4. Méthode de lecture selon l'une quelconque des revendications 1 à 3, caractérisée en ce que le faisceau lumineux est généré par le lecteur de lumière (52).

5. Méthode de lecture selon la revendication 4, caractérisée en ce que le lecteur de lumière (52) est oscillé entre des positions angulairement décalées pour générer et diriger le faisceau lumineux vers la zone de surface (26) portant le code à barres de l'article (10) dans l'une des positions et pour lire la lumière réfléchie de retour par la surface de diffusion lumineuse (60) dans l'autre des positions.

6. Méthode de lecture selon les revendications 4 ou 5, caractérisée en ce que le faisceau lumineux généré par le lecteur de lumière (50) est une lumière laser.

7. Appareil pour lire un code à barres gravé directement sur une surface rendue brillante d'un article, notamment une barre de combustible nucléaire, comportant :
a) des moyens définissant une surface de diffusion de lumière (60),
b) un lecteur de lumière (52) dirigé en général vers ladite surface de diffusion de lumière (60),
c) des moyens (44) pour positionner l'article (10) de manière à ce que la zone de surface (26) sur laquelle le code à barres (14) est directement gravé est disposée à côté de ladite surface de diffusion de lumière (60) et entre ladite surface de diffusion de lumière et ledit lecteur de lumière,
d) une source de lumière (52) pour diriger un faisceau lumineux sur la zone de surface (26) portant le code à barres de l'article (10),
e) l'arrangement étant tel que la lumière est réfléchie de la zone de surface (26) portant le code à barres sur la surface de diffusion de lumière (60) et de cette dernière audit lecteur de lumière (52).

8. Appareil de lecture selon la revendication 7, caractérisé en ce que ladite surface de diffusion de lumière (60) est disposée par rapport au passage du faisceau lumineux qui est dirigé sur la zone de surface (26) portant le code à barres de manière à ce que seulement 25 % environ de la lumière soient réfléchis par ladite surface de diffusion (60) en retour vers le lecteur de lumière (52).

9. Appareil de lecture selon les revendications 7 ou 8, caractérisé en ce que ladite surface de diffusion de lumière (60) est disposée à environ 30 degrés par rapport au passage du faisceau de lumière qui est dirigé sur la zone de surface (26) portant le code à barres de l'article (10).

10. Appareil de lecture selon l'une quelconque des revendications 7 à 9, caractérisé en ce que ledit lecteur de lumière (52) forme également la source de lumière pour générer un faisceau de lumière laser.

11. Appareil de lecture selon la revendication 10, caractérisé en ce que ledit lecteur de lumière (52) est adapté pour osciller entre des positions décalées angulairement pour générer et diriger le faisceau de lumière vers la zone de surface (26) portant le code à barres de l'article (10) dans l'une des positions et pour lire la lumière réfléchie en retour par la surface de diffusion de lumière (60) dans l'autre des positions.
